# EUROPEAN PATENT APPLICATION

(11) **EP 1 231 652 A1**
(43) Date of publication of application: **14.08.2002**
(21) Application number: 00961156.7
(22) Date of filing: 21.09.2000
(51) Int. Cl.: H01M 4/04, H01M 4/02, H01G 9/058, H01G 13/00

(54) **ELECTRODE STRUCTURE, AND ROLLING MACHINE FOR WORKING ELECTRODE STRUCTURE**

(30) Priority: 22.09.1999 JP 26912499
(71) Applicant: Nisshinbo Industries, Inc., Chuo-ku, Tokyo 103-8650 (JP); ITOCHU CORPORATION, Chuo-ku, Osaka-shi, Osaka 541-8577 (JP)
(72) Inventor: SATO, Takaya, Nisshinbo Industries, Inc., Midori-ku, Chib a-shi, Chiba 267-0056 (JP); SHIMIZU, Tatsuo, Ci Techno-sales Inc., Chiyoda-ku, Tokyo 102-0094 (JP)
(86) International application number: JP0006466
(87) International publication number: WO0122506

(57) **Abstract**

It is an object of this invention to provide a roller which is effective and suitable for rolling the electrode structure 1 coated with an elastic material on its surface and is to provide a processed electrode structure, the roller comprises a pair of work rolls 43, 43 sandwiching the electrode structure for rolling, at least a pair of backup rolls 42, 42 pressurizing the respective work roll, a pressuring device 44 pressurizing at least one of the backup rolls toward the work roll side, and a drive unit 45 rotating the work roll 43.

## Description

### Field of the Invention

This invention relates to a coating of an ion-conducting polymer on an electrode structure for an electrical component such as a primary and secondary cell, a capacitor, and an electric double layer capacitor.

### Background of the Invention

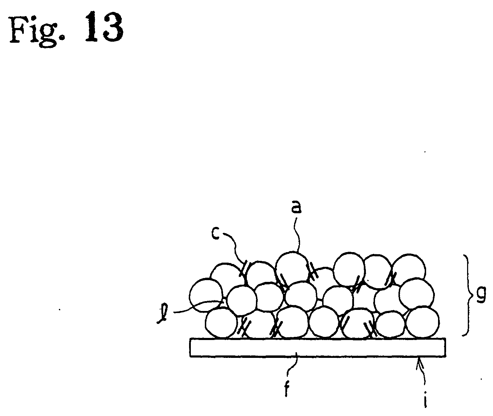

In the prior art, in a lithium ion battery, a positive electrode h as an electrode structure o is manufactured by mixing a mixture e of a powdered electrode active substance a comprising LiCoO₂, powdered electrically-conducting carbon b, a binder polymer c and a solvent d into a slurry, and applying it to a current-collecting member f and drying to form a compound film g, as shown in Fig. 13. The compound film g of Fig. 13 is a partial enlargement of the mixture e on the current-collecting member f.

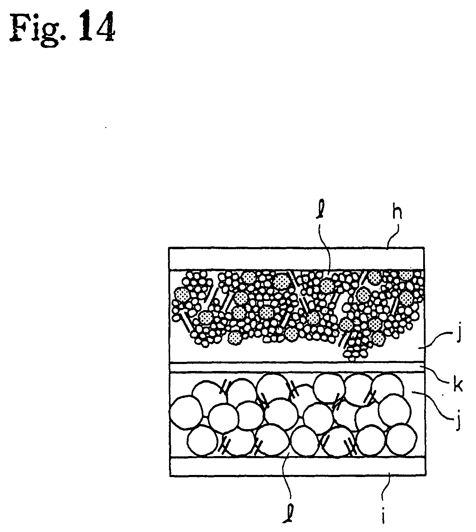

A negative electrode I as an electrode structure is manufactured by mixing the mixture e of the powdered electrode active substance a comprising powdered graphite, the binder polymer c and the solvent d into a slurry, applying it to the current-collecting member f, and drying to form the compound film g, as shown in Fig. 14.

The electrode structure is designed such that the electrode structure o is sandwiched between two work rolls m, m as shown in Fig. 16; a roller for rolling is used to increase the filing density of the electrode active substance. However, in rolling the electrode structure o is such that the electrode structure o inserted between the upper and lower work rolls m, m is pressed by being sandwiched between the upper and lower work rolls with a pressure force generated by a pressure device n, the weight of the upper work roll, and the weight of the housing p. In that case, although there is no issue to be resolved if such force is lower, if the force is higher both upper and lower work rolls becomes distorted. In order to withstand against the distortion, the upper and lower work rolls m, m may be designed thicker. Yet, the radial length pressing the electrode structure o viewing from the sectional direction of the rolls becomes longer, and there is no substantial change in the unit-area pressing force comparing to when the work rolls are in the previous thickness even if the work rolls are thicker.

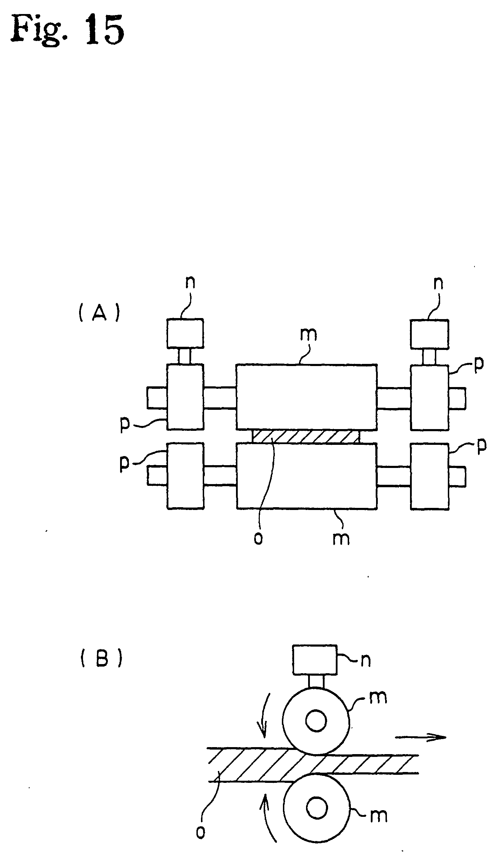

As shown in Fig. 15, since the conventional lithium ion secondary cell itself has a liquid electrolyte j filled between the positive electrode h and the negative electrode I, appropriate void I is to be remained in the electrode active substance layer (mixture film) flowing the electrolyte j around the electrode active substance, thereby practically functioning as a cell.

However, if a solid electrolyte instead of a liquid electrolyte is used, the solid electrolyte just like the liquid electrolyte cannot flow around the electrode active substance. Therefore, no sufficient current density is attained, which makes it impossible to practically function as a cell.

### Disclosure of the Invention

It is an object of this invention to provide a roller suitable for rolling the electrode structure.

It is another object of this invention to provide an effective electrode structure.

(This invention relates to the following the roller.)

This invention is a roller processing/rolling an electrode structure in which a powdered electrode active substance is adhered to the current collecting member, comprising a pair of work rolls sandwiching and rolling the electrode structure, at least a pair of backup rolls generating a pressing force onto the respective work roll, a pressuring device pressing at least one of the backup roll toward the work roll side, and a drive unit rotating the work rolls.

This invention still is a roller processing/rolling an electrode structure in which a powdered electrode active substance is adhered to the current collecting member, comprising a large diameter work roll and a small diameter other work roll having an electrode structure inbetween, a backup roll generating a pressing force onto the surface of the small diameter work roll, a pressuring device pressing the backup roll toward the small diameter work roll side, and a drive unit rotating the work roll.

This invention still is a roller processing/rolling an electrode structure, wherein the roller comprises a work roll housing having an axle receive of the work roll inside and a housing having the respective roll axle inside, and a spacer is provided between the respective two housings.

This invention still is an electrode structure for an electric part where ions move between the electrodes, wherein a powdered electrode active substance coated by an ion-conducting polymer is adhered to a current collecting member, and a roller processes/rolls the powdered electrode conductive substance on the current collecting member.

This invention still further is an electrode structure for an electric part where ions move between the electrodes, wherein a powdered large surface material coated by an ion-conducting polymer is adhered to a current collecting member, and a roller processes/rolls the powdered electrode conductinve substance on the current collecting member.

This invention yet further is an electrode structure mixing a powdered electrode active substance with a powdered electrode conducting substance.

### Brief Description of the Drawings

Fig. 1 is a diagram showing the manufacture of an electrode structure comprising an electrode active substance which supplies ions.
Fig. 2 is a diagram of an electrode structure comprising an electrically conducting substance wherein electricity moves between ions.
Fig. 3(A) is a schematic diagram of the roller, and Fig. 3(B) is a diagram showing an electrode structure to be rolled.
Fig. 4 is an isometric view of the roller mounting a pair of backup rollers.
Fig. 5 is an isometric view of the roller mounting one roller.
Fig. 6 is a diagram showing the roller mounting a pair of backup rollers.
Fig. 7 is a diagram showing the roller mounting one backup roller.
Fig. 8 is a schematic view of a secondary cell.
Fig. 9 is a front view of the press-sliding mixer.
Fig. 10 is a front view of the press-sliding mixer.
Fig. 11 is a side view of the press-sliding mixer as shown in Fig. 10.

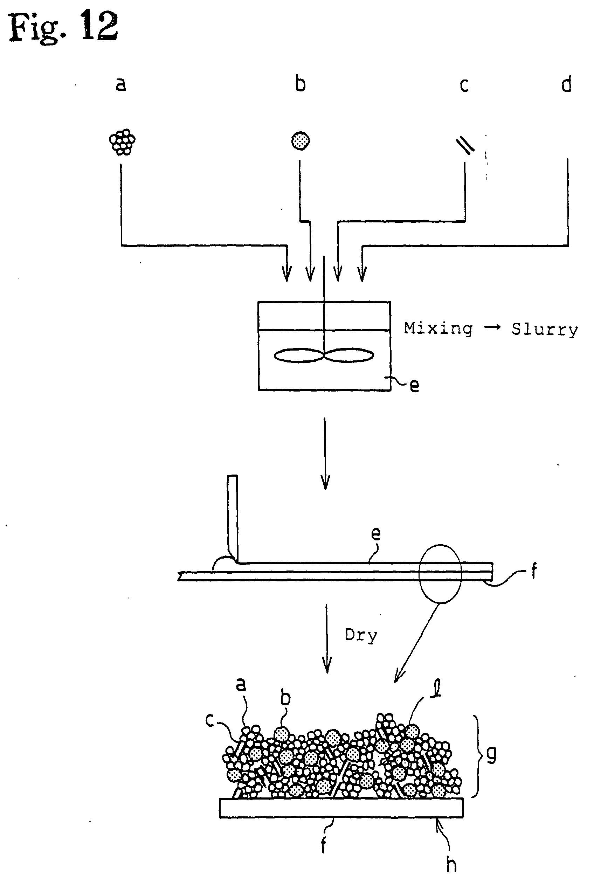

Fig. 12 is a diagram showing the conventional manufacture of an electrode structure comprising an electrode active substance which supplies ions.
Fig. 13 is a diagram of a conventional electrode structure comprising an electrically conducting substance wherein electricity moves between ions.
Fig. 14 is a schematic view of the conventional secondary cell.
Fig. 15 is a front view of a conventional roller.

This invention will now be described in more detail referring to the drawings.

### (a) Electrical components

Electrical components wherein ions migrate between electrodes are those in which an ion-conducting substance is disposed between electrode structures functioning as electrodes, and ions migrate within the ion-conducting substance so that a current flows between the electrodes, e.g., primary cells, secondary cells, and an electric double layer capacitor.

Batteries are characterized in that an ion-conducting substance disposed between the positive electrode structure and negative electrode structure and that an ion, including a proton or a positive hydrogen ion, migrates between electrodes and is accumulated. An electric double layer capacitor is characterized in that an ion-conducting substance is disposed between a pair of electrode structures and an electric double layer is formed between a large surface material within the electrode structures and an electrolyte of the ion-conducting substance.

### (b) Electrode structures

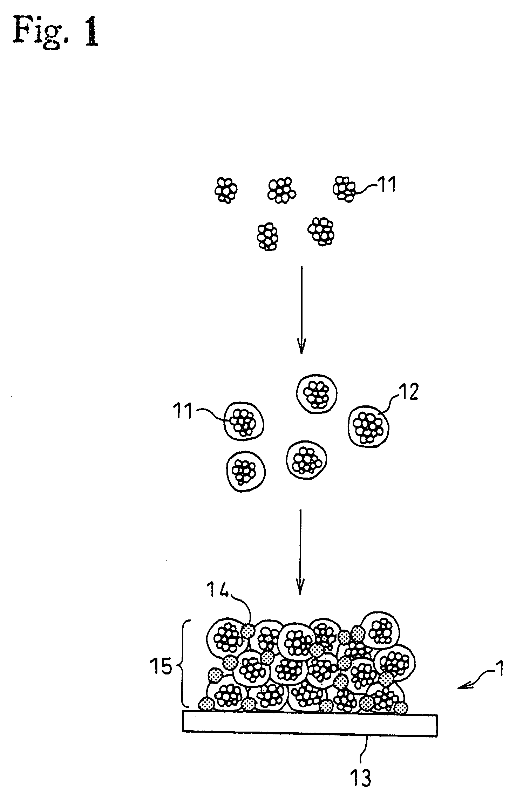

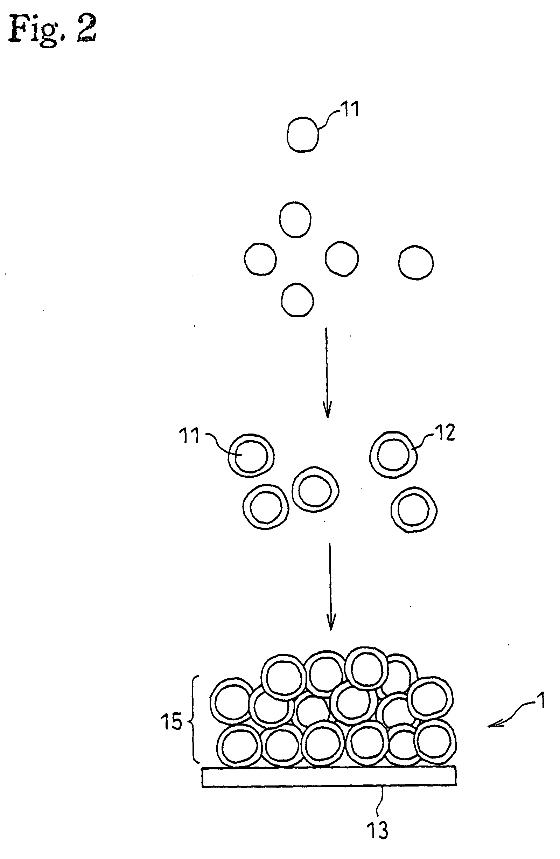

Electrode structures are used as electrodes in these electrical components, and exchange electrical charges with ions or draw ions. Fig. 13 and Fig. 14 show conventional structures that the powdered electrode active substance a is simply combined with the binder polymer c to adhere to the current-collecting member whereas Fig. 1 and Fig. 2 show the structure that the powdered electrode active substance 11 coated with the ion-conducting polymer 12 is adhered to the current-collecting member 13. For instance, they have a construction in which the powdered electrode active substance used for batteries or a powdered large surface material with a large surface area used for an electric double layer capacitor is made to adhere to a current-collecting member.

Fig. 1 shows a process for manufacturing an electrode structure 1 wherein a powdered electrode substance, i.e., a powdered electrode active substance 11, comprising particles of a compound such as LiCoO₂ is coated with an ion-conducting polymer 12, and is made to adhere to a current-collecting member 13. Likewise, Fig. 2 shows a process for manufacturing the electrode structure 1 wherein a powdered electrode substance, i.e., the powdered electrode active substance 11 having a form such as that of graphite or hard carbon is coated with the ion-conducting polymer 12, and is made to adhere to the current-collecting member 13. A powdered large surface material such as an activated carbon as the powdered electrode substance may be coated with the ion-conducting polymer and is adhered to the current-collecting member to form an electrode structure of the electric double layer capacitor.

Fig. 1 shows the case where the electrical conductivity of the powdered electrode active substance 11 is low. The electrical conductivity in the powdered electrode active substance and between the powdered electrode active substance 11 and current-collecting member 13, is increased and the current-collecting efficiency improved by mixing with a powdered electrically-conducting substance 14. The powdered electrically-conducting substance 14 may or may not be coated with the ion-conducting polymer. "Coating" refers to a state of contact wherein ions can easily migrate between the ion-conducting polymer 12 and the powdered electrode substance, i.e., the powdered electrode active substance 11 over their entire surfaces or the powdered large surface material over their entire surfaces. The ion-conducting polymer 12 is coated on the surface of the powdered electrode active substance 11 or the powdered large surface material so that the latter is covered by the ion-conducting polymer 12. The powdered electrode active substance 11 becomes more active the finer the particles of which it is comprised, but its activity can be suppressed to give greater stability by coating with the ion-conducting polymer 12.

If the layer of the coated ion-conducting polymer 12 is thick, conductivity decreases and current-collecting efficiency is poorer, so it is preferably thin.

The term "powdered" as used in the powdered electrode active substance 11, the powdered electrically-conducting substance 14, or the powdered large surface material refers to a substance having a fine particle state. In some cases, it may refer to a state wherein a large number of substances having a fine particle state are agglomerated.

For the purpose of obtaining a desirable electrode structure 1, the roller is activated to role the electrode structure 1 having an application layer 15 formed by applying the powdered electrode active substance 11 on the current-collecting member 13 in order to strengthen the adhesiveness between the powdered electrode active substance 11 and the current-collecting member 13 and to increase the density of the powdered electrode active substance 11. The rolled electrode structure may be a conventional structure or a structure coated with the ion-conducting polymer 12.

### (c) Rolling device

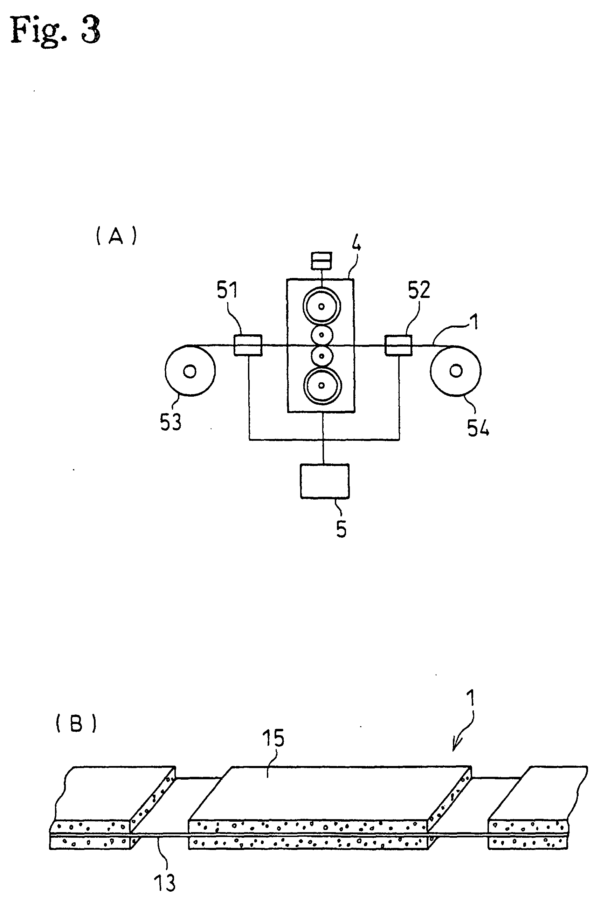

The rolling device at least is able to rotate and press and has a structure as shown in Fig. 3(A). In this rolling device, the tape electrode structure body 1, comprising the current collecting member 13 superposing an application layer 15 containing the powdered electrode active member as shown in Fig. 3(B), while under the control by a control device 5, is withdrawn from a unwinding roll 53, pre-treated by a preliminary treatment section 51, rolled by roller 4, post-treated by a subsequent treatment section 52, and winded on a winding roll 54.

When in pre-treating, a tensile force and thickness of the tape electrode structure body 1 may be measured, and the electrode structure body 1 may be cleaned. Alternatively, when in post-treating, a tensile force and thickness of the tape electrode structure body 1 may be measured, and the electrode structure body 1 may be cleaned.

### (d) Roller

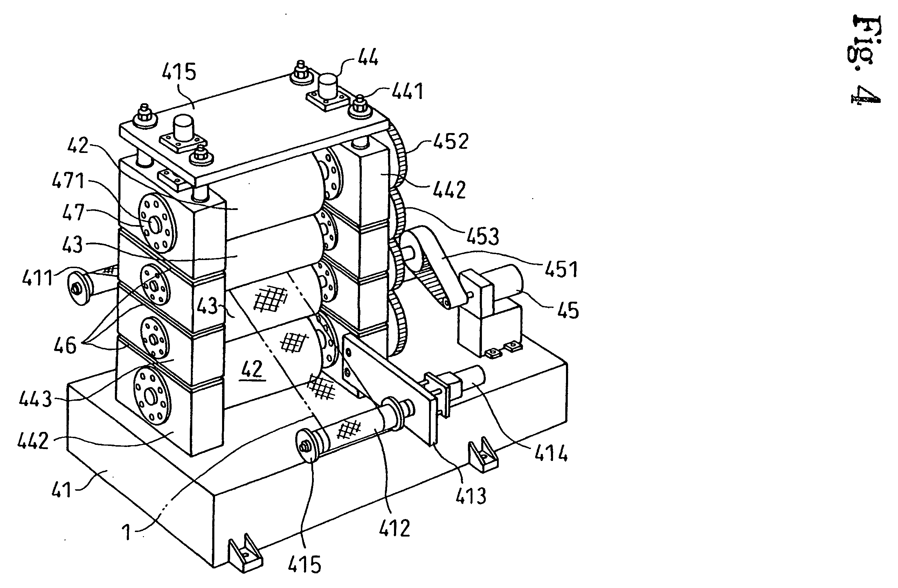

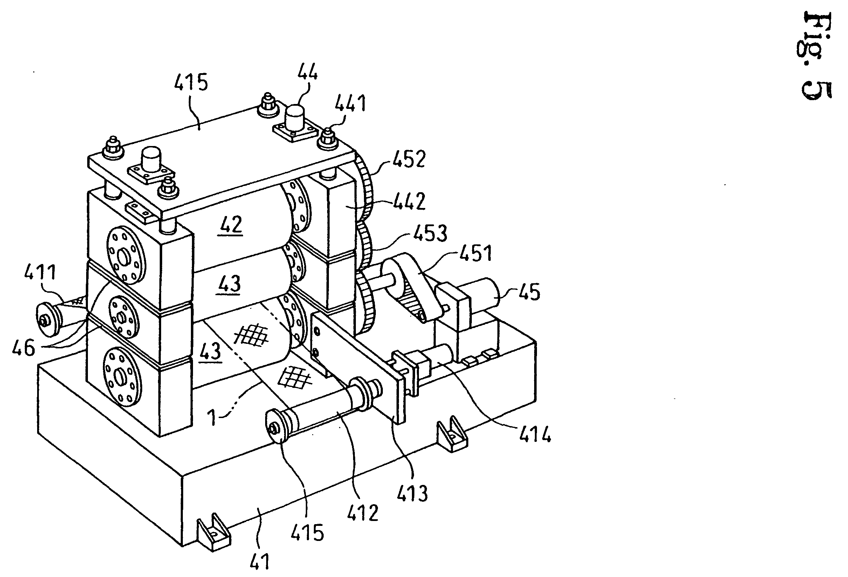

An example of roller 4 is explained with reference to Fig. 4 and Fig. 5. The roller 4 in Fig. 4 has a pair of work rolls 43, 43 and a pair of backup rolls 42, 42 pressurizing the work rolls 43, 43. In order to generate higher pressure on the work rolls 43, 43, diameter of the backup rolls 42, 42 may be designed to be larger than the small diameter work rolls 43, 43. The backup roll 42 is manufactured by adhering an extra-hard elastic material on the surface of an extra-hard material, which prevent from damaging the surface of the work roll 43 due to the contact with the work roll 43. This extra-hard elastic material may be denatured urethane or polyimide, and the hardness for example may be 80 or more at Rubber Code Shore D Scale of JIS but preferably between 90-98. The thickness of the extra-hard elastic material for example is between 100mm-30mm. Positioning the elastic material on the surface, oil and grease adversely affecting on the electrode structure body 1 may be omitted. The work roll 43 may be a small steel roll, being pushed by two large diameter rolls, thereby applying the large pressure on the electrode structure body 1 and applying a rolling force almost fills the void in the coating layer of the electrode structure body 1.

The drive unit 45,such as a motor driving the rolls and the backup roll housing 42 having an axle receiving section of the lower backup roll 42 are positioned at the upper portion of the roller base 41. The pair of work roll housing 443, 443 of the pair of work rolls 43, 43 and a backup roll housing 442 of the upper backup roll are positioned at the upper portion of the lower backup roll housing 422. A roll axle 471 is rotatably installed at the respective axle receiving section 47.

The respective backup roll housing 442 and the respective work roll housing 443, each has a hole through which a diver 441 is penetrated, and the respective work roll housing 443 and the respective backup roll housing 442, each is placed between the roller base 41 and the upper frame plate 415 to penetrate the diver 441 in order to prevent the deviation of the positions of the rolls 42, 43. A gate-shape frame may be used instead of the diver 441. The respective roll housings 442, 443 is desirably positioned at both ends of the rolls 42, 43, where four divers 441 may be employed to stably be fixed.

As necessary, the unwinding core 411 and the winding core 412 are processed in the roller 4, and the electrode structure body 1 is withdrawn from the unwinding core 411 holding the electrode structure body 1, and the pair of work rolls 43, 43 are used to roll the electrode structure body 1, thereby winding by the winding core 412. In that case, the unwinding core 411 and the winding core 412 are installed on the frame 413 fixed on a stationary member such as a housing 442, and the motor 414 is activated to perform the drive control.

### (e) Pressuring device

A pressuring device 44 is fixed on the upper frame plate 415, and the upper backup roll housing 442 is pressed downward, so that the upper backup roll 42 presses the upper work roll 43 downward, thereby generating the pressure between the pair of work rolls 43, 43. The pressuring device presses both ends of the upper backup roll housing 442 and evenly presses the work roll 43 downward. Although the pressuring device 44 is position in the upper portion in Fig. 4 and Fig. 5, it may be positioned in the lower portion or positioned in either side if the rolls are arranged horizontally.

### (f) Driving unit

The driving unit 45 transmits the rotating force to a work roll driving gear 453 via a driving belt 451 and what not. As necessary, the work roll driving gear 453 and a backup roll driving gear 452 may be installed on the respective roll axle 471 of the rolls for the respective roll to rotate simultaneously or a main roll is directly driven while the remaining rolls may be dependently driven by a motor but simultaneously with the rotation of the main roll.

### (g) Adjustment plate

Placing an adjustment plate 46 between the respective roll housings prevents a pressure failure between the respective rolls due to the deviation in the preciseness of the pressure and the operation by the pressuring device 44, which assures the preciseness of the thickness of the electrode structure body 1.

For example, the adjustment plate 46 may be a spring and a spacer, which maintains clearances among four rolls when a pressuring device such as a hydraulic cylinder is extended. The adjustment plate positioned between the work rolls 43, 43 adjust a gap appropriately so that the work rolls 43, 43 may not contact each other. The spring pushes the housings 442, 443 and rolls 42, 43 evenly with gaps when the pressuring device such as a cylinder moves backward.

### (h) Roller for a pair of large diameter and small diameter work rolls

In the roller as shown in Fig. 5, the pair of work rolls 43, 43, one roll is pressed by the large backup roll 42, and the other backup roll 42 is omitted at the large diameter work roll, thereby reducing the number of rolls required to be three which downsizes the roller 4.

In order to increase the pressing force, a pair of work rolls 43, 43 are divided into a large diameter roll and a small diameter roll. The small diameter work roll 43 is pressed by the large backup roll 42, and the other work roll 43 for the large diameter work roll 43 may be omitted.

### (i) Operation of the roller

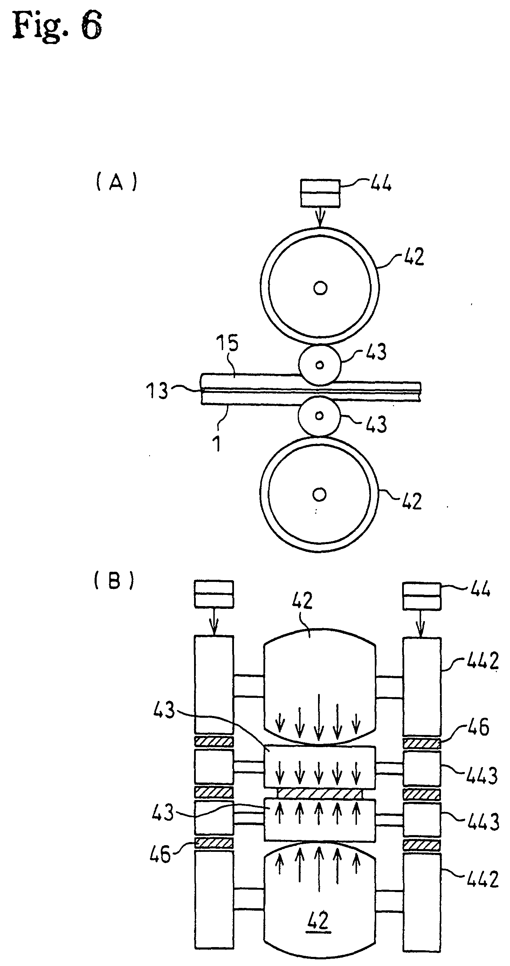

As shown in Fig. 6, the pressuring device 44 pushes the backup roll 42 down from the above, and the electrode structure 1 inserted between the upper work roll 43 and the lower work roll 43 is rolled/processed due to the operation of the pressuring device 44. If the diameter of the backup roll is set to be about 300mm while the diameter of the work roll is to be about 150mm, unit-area maximum pressure rotating the electrode structure 1 becomes twice or 2.5 times larger than the pressure in the traditional device, which improves cell effectiveness. Therefore, a finer work roll 43 comparing to the conventional work roll may be utilized and at the same time there is no difference due to a roll bent (bending of the work roll 43, 43), thereby maintaining the uniform gap.

Therefore, the gap between the work rolls 43, 43 may be adjusted so that the entire width is to be about 80µ for example by adjusting the adjustment plate 46 of the lower work roll 43. Then, when the electrode structure 1 is rolled by the work roll 43, the electrode structure 1 is inserted as the thickness of the adjustment plates 46, 46 of the upper work roll and the lower work roll may be adjusted making an adjustment for the work roll bending in order to uniform the thickness of the entire width of the electrode structure 1. In this case, the backup roll 42 may be designed to be a drum-shape (a roll with a clausing treatment) as shown in Fig. 6(B).

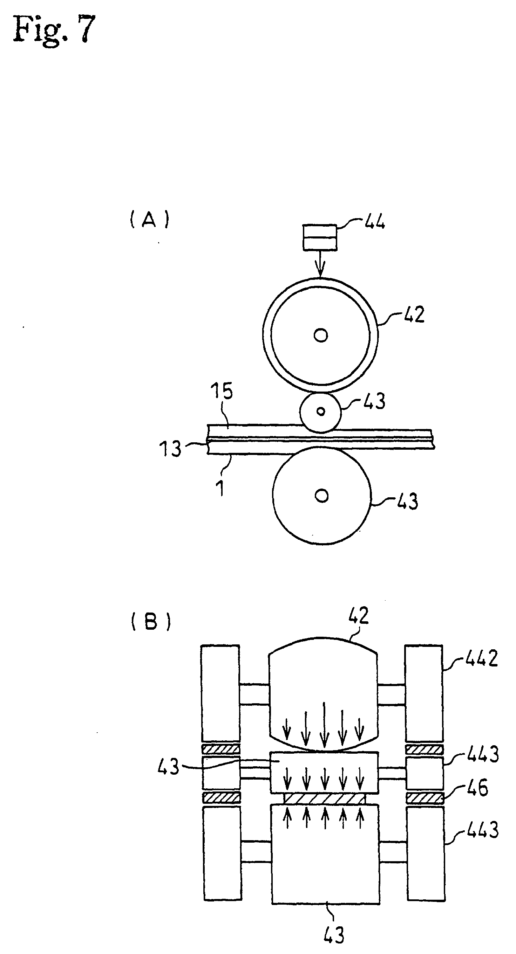

Fig. 7 uses three work rolls, wherein the lower work roll has a larger diameter and is hard to be bent; the upper work roll has a smaller diameter so as to apply higher unit-area pressure on the electrode structure 1; pushing back by the backup roll 42 adjusts the amount of bending; and a uniform large pressure may be applied to the electrode structure 1. In addition, the adjustment of the thickness of the electrode 1 and the adjustment of the spacer may be facilitated.

Under the above-condition, for example, the thickness of the electrode structure 1 prior to the rolling is set to be 150 µ and the gap of the work roll while rolling is to be 80 µ , it was acknowledged that the thickness of the electrode structure after rolling regains and becomes desirable 100µ.

### (j) Powdered electrode active substance

The powdered electrode active substance may be a material which permits insertion and separation of ions, or a π-conjugated electrically-conducting polymer material.

There is no particular limitation on the electrode active material used as the positive electrode in a non-aqueous electrolytic battery, but in the case of a rechargeable secondary cell, a chalcogen compound permitting insertion and separation of lithium ions or a complex chalcogen compound containing lithium may for example be used.

Examples of chalcogen compounds are FeS₂, TiS₂, MoS₂, V₂O₅, V₆O₁₃ and MnO₂. Examples of chalcogen compounds containing lithium are LiCoO₂, lithium complexes represented by LixNiyM₁-yO₂ (where M is at least one metal element chosen from transition metals or Al, but preferably at least one metal element chosen from Co, Mn, Ti, Cr, V and Al, and 0.05≦x≦1.10, 0.5≦y≦1.0), LiNiO₂, LiMnO₂ and LiMn₂O₄. These compounds may be obtained from the oxides, salts or hydroxides of lithium, cobalt, nickel or manganese as starting materials, mixing the starting materials depending on the composition, and firing in an oxygen atmosphere at a temperature in the range of 600 °C-1000 °C.

There is no particular limitation on the electrode active substance used as the negative electrode in a non-aqueous electrolyte battery, but a material permitting insertion and separation of lithium ions may be used such as lithium metal, lithium alloy (alloys of lithium and aluminum, lead and indium, etc.), and carbon materials.

Examples of π-conjugated conducting polymer materials are polyacetylenes, polyanilines, polypyrroles, polythiophenes, poly-ρ (para)-phenylenes, polycarbazoles, polyacenes and sulfur polymers.

In particular, in non-aqueous electrolyte primary cells, a large battery capacity can be obtained by using lithium metal for the negative electrode.

In non-aqueous electrolyte secondary cells, an excellent cycle life can be obtained by using carbon materials which permit insertion and separation of lithium as the negative electrode. There is no particular limitation on the carbon material, examples being pyrolytic carbon, cokes (pitch coke, needle coke or petroleum coke), graphites, glass carbons, organic polymer compound firing products (products obtained by firing and carbonizing phenolic resins and furan resins at a suitable temperature), carbon fiber and active carbon.

### (k) Powdered electrode substance with a large surface area

A powdered electrode substance with a large surface area is a powdered large surface material that may draw many ions on that surface.

A preferable powdered large surface material is a carbon material with a specific surface area of 500m²/g or more, preferably 1000m²/g or more, and more preferably most preferably 1500m²/g-3000m²/g and an average particle diameter of 30µm or less, preferably 5-30µm. The specific surface area and the average particle diameter outside the above-ranges cause a large electrostatic capacity and make it difficult to obtain an electric double layer capacitor with a lower resistance.

A preferable powdered large surface material especially is an activated carbon resulting from activating the carbon material such as by a steam activating treatment and a fused KOH activating treatment. The activated carbon for example may be palm shell activated carbon, a phenol activated carbon, a petroleum coke type activated carbon, mesofusepitch carbon, and polyacenes. One of the above activated carbon types or combination of two ore more activated carbon types may be employed. Phenol activated carbon, a petroleum coke type activated carbon, and a polyacenes are preferable since they provide a larger electrostatic capacity.

### (l) Powdered electrically-conducting substance

The powdered electrically-conducting substance increases the electrical conductivity of the electrode structure, there being no particular limitation thereon, but metal powders and carbon powder may be used. As carbon powder, pyrolytic carbon such as carbon black and its graphitization products, artificial and natural scaly graphite powder, and carbon fiber and its graphitization products, are suitable. Mixtures of these carbon powders may also be used.

### (m) Ion-conducting polymer

The ion-conducting polymer is a polymer which can dissolve at least the lithium salts described hereafter at a concentration of at least 0.1M (moles/l), the polymer containing the lithium salt at a concentration of at least 0.1M having an electrical conductivity of 10⁻⁸ S (siemens)/cm at room temperature. It is to be particularly preferred that the ion-conducting polymer dissolves at least lithium salts to a concentration of 0.8M-1.5M, the resulting polymer solution having an electrical conductivity of 10⁻³ S/cm - 10⁻⁵ S/cm at room temperature.

The lithium salt is at least one type of lithium salt having ClO₄⁻, CF₃SO₃⁻, BF₄⁻, PF₆⁻, AsF₆⁻, SbF₆⁻, CF₃CO₂⁻ or (CF₃SO₂)₂N⁻ as anion.

The ion-conducting polymer raw material is a substance which produces the ion-conducting polymer by cross-linking, etc., when energy is supplied externally. The energy may be heat, ultraviolet light, light or electron radiation.

### (n) Current-collecting member

The current-collecting member should be a substance which easily passes electricity. Its shape and material are selected according to the electrical components involved, and as an example, it can be formed by fashioning an electrically-conducting substance such as aluminum or copper into a plate, foil or mesh.

In the case of a plate or foil current-collecting member, one surface or both surfaces are used according to the structure of the electrical components, and the powdered electrode active substance is made to adhere to one surface or both surfaces.

### (o) Secondary cell

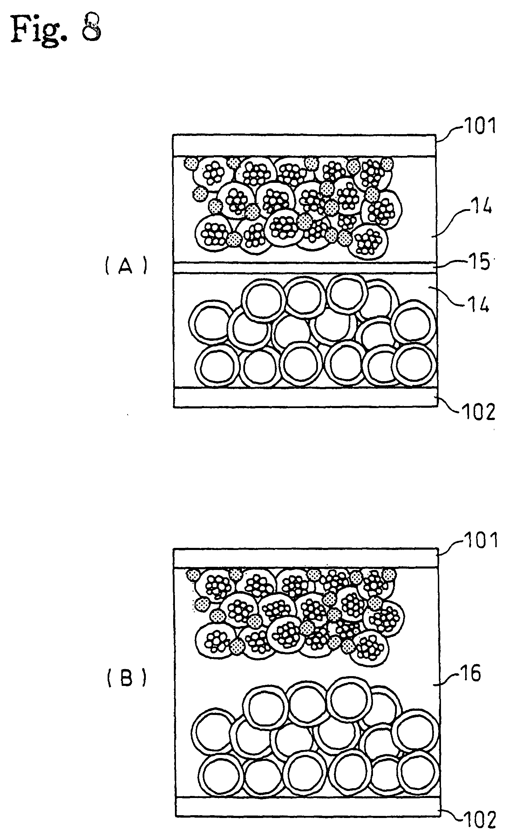

The secondary cell comprises the ion-conducting substance disposed between two types of the electrode structures 1. The secondary cell is formed by introducing a liquid such as the electrolyte 14 between an electrode structure 101 of the positive electrode and an electrode structure 102 of the negative electrode, and disposing a separator 15 between them as shown for example in Fig. 8(A). Alternatively, it is formed by disposing a solid electrolyte substance such as an ion-conducting polymer 16 between the electrode structure 101 of the positive electrode and the electrode structure 102 of the negative electrode as shown in Fig. 8(B).

### (i) Electric double layer capacitor

The electric double layer capacitor has a construction in which the powdered large surface material is used to form a pair of electrode structures and an electrolyte substance is disposed between the pair of electrode structures.

The method of manufacturing these electrode structures will now be described.

### (a) Manufacture of electrode structure

If the powdered electrode active substance is used as the powdered electrode substance, to manufacture the electrode structure, an extremely thin ion-conducting polymer or ion-conducting polymer raw material is coated on the surface of the powdered electrode active substance 11. Next, a solvent is added to liquefy the mixture into a paste which is applied to the current-collecting member, and dried to evaporate the solvent. Alternatively, the solvent can be added from the beginning to make a paste when the ion-conducting polymer or ion-conducting polymer raw material is coated. If the powdered large surface material is used as the powdered electrode substance, the same process applied with the powdered electrode active substance may be employed to manufacture the electrode structure.

In this process, a minute amount of the ion-conducting polymer or ion-conducting polymer raw material is used, the particle surfaces of the powdered electrode active substance are coated with the ion-conducting polymer, no voids are formed, and gaps in the powdered substance are reduced.

To coat the ion-conducting polymer or ion-conducting polymer raw material on the powdered electrode active substance, the ion-conducting polymer or ion-conducting polymer raw material and the powdered electrode active substance are press-slid together to obtain a press-slid product.

### (b) Press-sliding

Press-sliding is the action of sliding while pressing mixtures 10 of the ion-conducting polymer 12 or the raw material of the ion-conducting polymer 12 and the powdered substance 11 together. An external force is applied to the mixtures so that they cohere to each other and the particles rotate, and this process is performed repeatedly to obtain a press-sliding product.

### (c) Press-sliding mixer

The press-sliding mixer is shown, for example, in Fig. 4. The mixture 10 of the ion-conducting polymer 12 or its raw material with the powdered substance 11, or the mixture 10 comprising this mixture and a solvent or the like, is introduced into a container 21, and the main blade 22 is rotated. There is a gap between a base 211 of the container 21 and a bottom surface of the main blade 22. When the main blade 22 is rotated, part of the mixture 10 enters the space between the base 211 of the container and the main blade 22, is subjected to press-sliding, and is kneaded. This process is repeated so that the ion-conducting polymer 12 or its raw material coats the powdered substance 11.

A press-sliding mixer 2 may if necessary be provided with a dispersion blade 23 in the container 21. The dispersion blade 23 is rotated at high speed to disperse the press-slid mixture 10.

### (d) Container

The container 21 is provided for holding the mixture 10 which is press-slid and stirred. The bottom surface of the container 21 may be such as to permit press-sliding of the mixture 10, and may be slanting as in Fig. 4 or flat as in Fig. 5. For example, if it is slanting, it has a bottom part 2111, and slants upwards from the bottom part 2111 towards the circumference. The center part may be situated in a low position, and have a slope rising towards the circumference. The bottom 211 may be formed in the shape of, for example, a grinding mortar, and the angle of the bottom part 2111 may for example be 120 degrees. The bottom 211 of the container is wear-resistant, and is formed by thermal spraying with tungsten or carbide using SUS. Plural bottom parts 2111 of this type may also be formed on the bottom surface.

### (e) Main blade

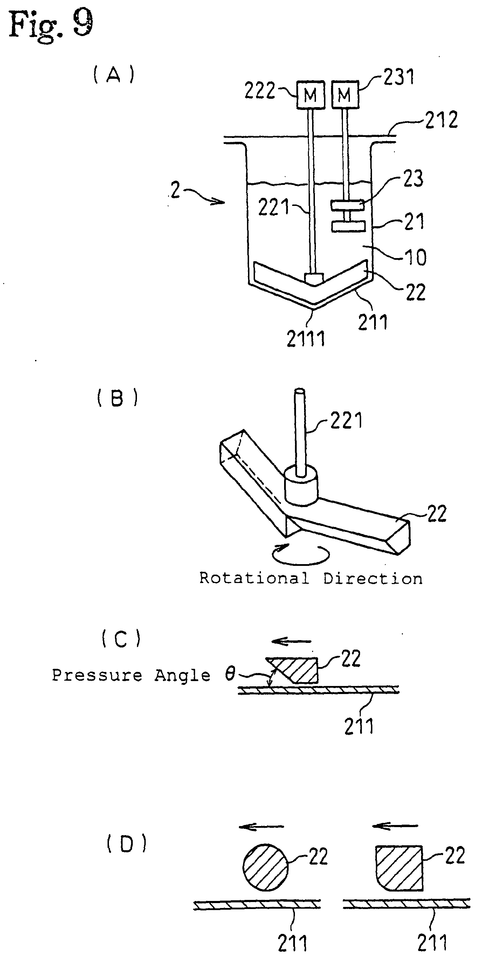

The main blade 22 functions together with the bottom surface of the container 21, serving to press-slide and stir the mixture. In the main blade 22, a shaft is attached in a position corresponding to the bottom part 2111 of the container 21 as shown for example in Fig. 9(B), and it curves upwards along the bottom of the container from the bottom part 2111. The main blade 22 may comprise two blades attached from the center part as shown in Fig. 9(B), or it may comprise a larger number of blades, e.g. 10 or more, depending on the amount and type of mixture.

The rotation speed of the main blade, i.e., the number of rotations, is set low, for example to 120 rpm or less, when press-sliding is performed.

The gap between the bottom surface of the container 21 and the base surface of the main blade 22 is set as narrow as is necessary for press-sliding the mixture, for example 15 mm or less.

The surface in the motion direction (press-sliding direction) of the main blade 22 is formed so that a pressing angle θ relative to the bottom surface of the container 21 is an acute angle. For example, if the cross-section of the main blade 22 is a reverse trapezoid as shown in Fig. 9(C), the pressing angle is from 3 degrees to 70 degrees. The cross-section of the main blade 22 may also be circular or have a rounded comer as shown in Fig. 9(D). The material of the main blade has wear-resistant properties, and is formed for example by thermal spraying with tungsten or carbide using SUS.

If a surface in a direction opposite to the motion direction (press-sliding direction) of the main blade 22 is formed for example effectively perpendicular to or at an obtuse angle to the bottom surface, the mixture 10 can be collected around the main shaft 221 by rotating the main shaft 221 in the reverse direction.

### (f) Dispersing blade

The dispersion blade 23 is intended to disperse the mixture 10 which has been press-slid by the main blade 22. The dispersion blade 23 is disposed in a position at which the mixture 10 can be dispersed, and it rotates at a high speed such as 1000-4000 rpm. Due to this high speed rotation, the ion-conducting polymer 12 or its raw material coated on the particle surfaces of the powdered substance 11 uniformly disperses through the whole of the powdered substance. The mixture adheres on the area surrounding the main shaft 221 of the main blade 22 when in firm mixing or low clay dispersion and tends to be ununiformed mixing. The dispersion blade 23 is positioned on the main shaft 221 of the main blade 22, rotating the same from the dry mixing stage to prevent the adhesion on the area surrounding the main shaft 221.

### (g) Action of press-sliding mixer

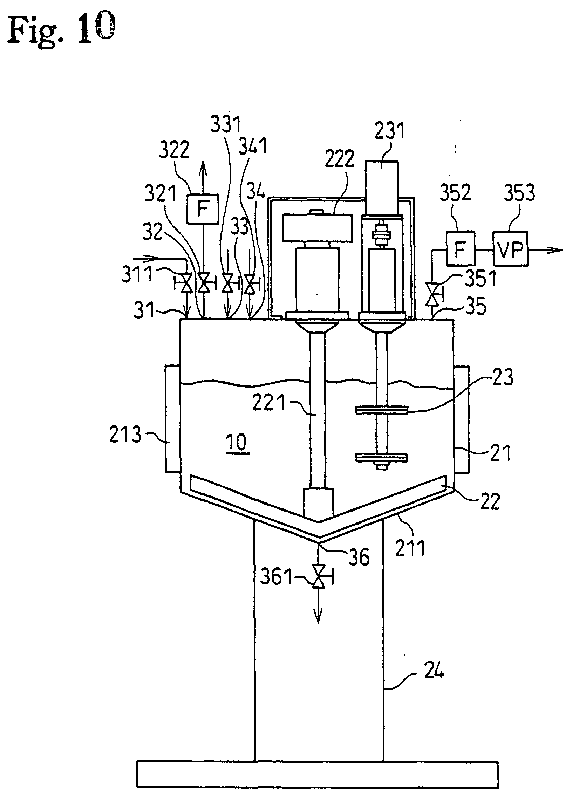

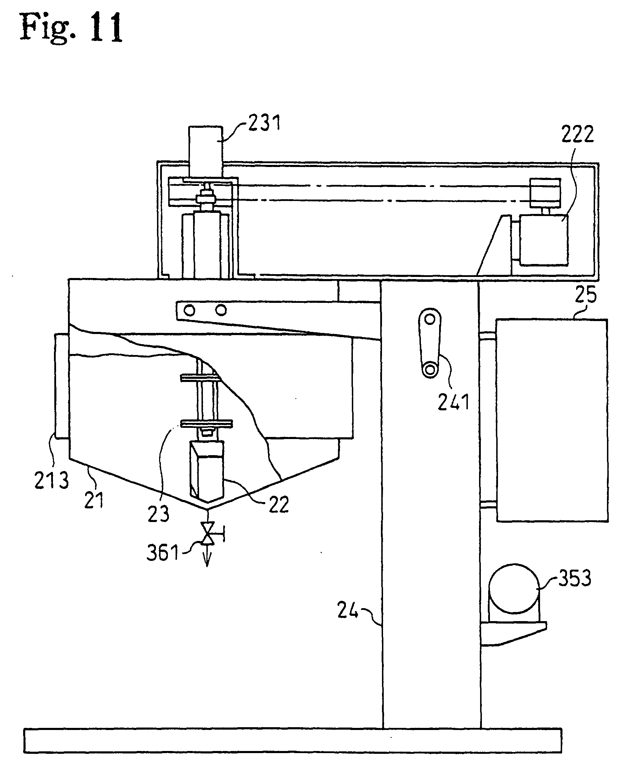

A description of the operation using the press-sliding mixer of Fig. 10 and Fig. 11 will now be given. The press-sliding mixer is supported on a supporting platform 24, the container 21 being raised by a handle 241, and is controlled by a control panel 25.

First, the powdered substance 11 (containing an additive) is measured out, and introduced from a powdered substance input port 34. In an automated system, a measuring hopper or the like is installed above the powdered substance input port 34 for storage and measurement, and a valve 341 of the powdered substance input port is automatically opened by an input command. Simultaneously, to eliminate measurement errors from pressure rise in the container due to introduction of the powder, a discharge port 32 fitted with an aspiration filter 322 is opened alone so that only air is discharged.

Next, a valve 331 of an input port 33 for the ion-conducting polymer or its raw material is opened, and the polymer or its raw material is measured out manually or automatically and introduced into the container in the same way as the powdered substance. After introduction of the powdered substance and ion-conducting polymer or its raw material is complete, the input valves 331, 341 are closed. Further, if warm water at 30 °C is recirculated through a jacket 213 of the container to promote wetting of the powdered substance and the ion-conducting polymer or its raw material, the wetting efficiency can be improved. However, when a penetration-assisting solvent is used, processing is performed at ordinary temperature.

Next, the main motor 222 is rotated at a low speed of about 10 rpm, the mixture 10 of the ion-conducting polymer or its raw material and the powdered substance is press-slid between the bottom surface of the container 21 and the main blade 22, and the ion-conducting polymer or its raw material gradually begins to penetrate the powdered substance. At this time, the press-slid mixture 10 rises up the container at the tip of the main blade 22, the mixture 10 falls down from above the center part of the container, and a turning over action takes place in the container over its entire circumference. This is repeated regularly so that the whole mixture is uniformly press-slid. After repeating the action for approximately 1 hour, the rotation speed of the main shaft 221 is automatically or manually increased to 60 rpm, and when wetting of the mixture 10 has reached effectively half of the surface area, a vacuum pump 353 of a degassing port 35 is operated, a degassing valve 351 is opened, and degassing is performed via a filter 352 for about 1 hour. In other words, the main blade 22 press-slides the mixture 10 while degassing is performed, so wetting and penetration dispersion of the ion-conducting polymer or its raw material in the powdered substance is promoted. Here, care should be taken when a low boiling-point solvent is added to the ion-conducting polymer or its raw material to promote dispersion in the powdered substance, as the concentration or viscosity of the ion-conducting polymer or its raw material increases and dispersion becomes difficult if suction degassing is continuously performed by a high vacuum blower.

When penetration degassing has reached about 70% after degassing for approximately 1 hour, the dispersion blade is rotated at 2800 rpm to promote dispersion.

### (h) Application to current-collecting member

The press-slid substance which has been made into a paste is thinly applied to the surface of the current-collecting member. After application, the solvent evaporates and dries to obtain the electrode structure. The device which applies the press-slid substance to the current-collecting member may be a doctor knife applicator. The applied electrode structure is applied to the tape current collecting member as shown so that the application layer at the respective electrode is isolated in Fig. 3(B).

### (a) Rolling by the rolling device

The electrode structure 1 s is set between the work rolls 43 and 43, and stall tension (tension at the stand by state and 20-30% tension at driving) is applied to the electrode structure 1 between the unwinding rollers 53 and 54. When the line is shifted in a yield drive, the entire line is driven in extremely low speed. Then, the upper backup roll housing 442 and the upper backup roll 42 begin to move downward due to the operation of the pressuring device. The upper backup roll 42 and the upper work roll 43 make a line contact, and the upper work roll 43 together with the upper backup roll 42 rotate and move downward. The upper work roll 43 contacts the upper surface of the electrode structure 1; three rolls contact and roll; if the rolls move downward further by pressing the spring, the lower work roll 42 comes to contact with the surface of the lower backup roll 42. As a result, four rolls synchronize and begin to make low r.p.m. operation.

The pressuring device 44 such as a hydraulic cylinder further pressurize the upper backup roll housing 442 with the predetermined pressure, and roll surfaces of four rolls are evenly pressurized.

If the work rolls 43, 43 intensively rotates the electrode structure 1, the application layer 15 and the current collecting member 13 are compressed together to be compressed and expanded in the cross direction to be deformed. On the other hand, a layer without the application layer 15 is not compressed, and therefore no compression occurs. Accordingly, the boundary section between the application layer 15 and the layer without the application layer 15 brake and the strength is decreased. Limit of this tensile force is considered to be about twice as the tensile force by the unwinding roller 54.

If the tape electrode structure 1 is rolled, the pressing force on the work rolls 43, 43 is increased, and the best rolling with high compressibility prior to the breakage of the electrode structure 1.

The conventional roller is comprised of two work roles without a backup roll, and the pressing force may not be increased due to the distortion of the work roll. On the other hand, the roller 4 in this invention is capable of rolling the electrode structure 1 until it breaks and to obtain the electrode structure 1 with high compressibility before the breakage, thereby obtaining high electrode density and low electrode impedance.

By rolling the electrode structure 1 using the roller 4 of this invention, the density of the electrode structure increases. The electrode density increase means an increase in the area of contact between the powdered electrode active substances in the electrode structure and between the powdered electrode active substance and the powdered electrode conducting substance in the electrode structure. As a result, impedance of the electrode decreases. At the same time, the area of contact between the current collecting member and the powdered electrode active substance and the powdered electrode conducting substance may be set larger. Impedance of the electrode itself decreases to become a desirable electrode. Yet, the electrode density increases, and the amount relative to unit-area surface of the powdered electrode active substance and the powdered electrode conducting substance in the electrode structure 1 increases. As a result, if the electrode structure 1 is used for a cell, the area-unit energy density increases, thereby the entire cell becomes smaller.

### Description of the Preferred Embodiments

Hereafter, an embodiment of a lithium ion secondary cell will be described.

### (a) Example of manufacture of positive electrode structure (Example 1)

9.1 weight parts of LiCoO₂ of average particle size 5 µm which is a powdered electrode active substance, and 0.6 weight parts of graphite powder of average particle size 4 µm which is a powdered electrically-conducting substance, were introduced into a press-sliding mixer, and press-slid for 20 minutes. Next, 0.546 weight parts of an ion-conducting polymer raw material (A1) and 3.5 weight parts of acetonitrile were added. The ion-conducting polymer raw material (A1) was a mixture, and its composition and mixing ratio are shown in Table 1.

### [Table 1]

The press-slid substance to which the ion-conducting polymer raw material (A1) was added, was press-slid in the press-sliding mixer for 5 hours. The press-slid substance was paste-like. 0.254 weight parts of polymeric MDI, MR-200 (NPU Co.) was added to the press-slid substance, and the mixture stirred for 5 minutes in the press-sliding mixer. The press-slid substance was removed, transferred to aluminum foil of thickness 20 µm, and spread by a doctor knife applicator of 100µm gap. The resulting product was left at room temperature for 15 minutes, and then heated at 80°C for 1 hour. The electrode with a single applied surface obtained is turned upside down to be fixed on a flat surface and is spread by a doctor knife applicator of 100µm gap similarly. The resulting product was left at room temperature for 15 minutes, and then heated at 80°C for 1 hour. The electrode obtained is the electrode layer applied on both side of aluminum foil of thickness 20 µm gap, and the entire thickness was 170 µm. This electrode of the invention is rolled by three rollers at room temperature. The thickness of the electrode after rolling was 120 µm gap.

### (b) Example of manufacture of positive electrode structure (Example 2)

9.0 weight parts of LiCoO₂ of average particle size 5 µm which is a powdered electrode active substance, and 0.6 weight parts of ketjenblack and 0.2 weight parts of graphite powder of average particle size 4 µm which are powdered electrically-conducting substances, were introduced into a press-sliding mixer (capacity 300cc), and press-slid for 20 minutes. Next, 1.172 weight parts of an ion-conducting polymer raw material (A1) and 3.5 weight parts of acetonitrile were added. These mixtures were press-slid for 5 hours in the press-sliding mixer. The press-slid substance was paste-like. 0.548 weight parts of polymeric MDI, MR-200 (NPU Co.), was added to the press-slid substance, and the mixture press-slid for 5 minutes. The press-slid substance was removed, transferred to aluminum foil of thickness 20 µm, and spread by a doctor knife applicator of 100µm gap. The resulting product was left at room temperature for 15 minutes, and heated at 80°C for 1 hour. The electrode with a single applied surface obtained is turned upside down to be fixed on a flat surface and is spread by a doctor knife applicator of 100 µm gap similarly. The resulting product was left at room temperature for 15 minutes, and then heated at 80°C for 1 hour. The electrode obtained is the electrode layer applied on both side of aluminum foil of thickness 20 µm gap, and the entire thickness was 170 µm. This electrode of the invention is rolled by three rollers at room temperature. The thickness of the electrode after rolling was 120 µm gap.

### (c) Example of manufacture of positive electrode structure (Example 3)

9.1 weight parts of LiCoO₂ of average particle size 5 µm which is a powdered electrode active substance, 0.341 weight parts of an ion-conducting polymer raw material (A1) and 3.0 weight parts of acetonitrile were introduced into a press-sliding mixer (capacity 300cc), and the mixture press-slid for 7 hours. The press-slid substance was paste-like. Next, 0.159 weight parts of polymeric MDI, MR-200 (NPU Co.) was added, and the mixture press-slid for 5 minutes. The press-slid substance was removed, transferred to aluminum foil of thickness 20 µm, and spread by a doctor knife applicator of 100 µm gap. The resulting product was left at room temperature for 15 minutes, and heated at 80°C for 1 hour. The thickness of the electrode obtained was 80 µm. The electrode obtained is the electrode layer applied on both side of aluminum foil of thickness 20 µm gap, and the entire thickness was 170 µm. This electrode of the invention is rolled by three rollers at room temperature. The thickness of the electrode after rolling was 120 µm gap.

### (d) Example of manufacture of positive electrode structure (Example 4)

9.1 weight parts of LiCoO₂ of average particle size 5 µm which is a powdered electrode active substance, and 0.6 weight parts of graphite powder of average particle size 4 µm which is a powdered electrically-conducting substance, were introduced into a press-sliding mixer device (capacity 300cc), and press-slid for 20 minutes. Next, 2.0 weight parts of an ion-conducting polymer raw material (A2) and 3.0 weight parts of acetonitrile were added. The ion-conducting polymer raw material (A2) was a mixture, and its composition and mixing ratio are shown in Table 2. In the Table 2, the same result may be obtained by the use of polyethyleneglycoldimethacrylate (536 molecular weight) instead of trimethylolpropanetrimethacrylate.

### [Table 2]

The press-slid substance to which the ion-conducting polymer raw material (A2) was added, was press-slid in the press-sliding mixer (capacity 300cc) for 5 hours. The press-slid substance was paste-like. A solution of 0.01 weight parts of 2,2'-azobis (2,4-dimethylvaleronitrile) and 0.5 weight parts of a (1/1) vol liquid electrolyte of ethylene carbonate (EC)/diethylene carbonate (DEC) was added to the press-slid substance, and the mixture further press-slid for 5 minutes. The press-slid substance was removed, transferred to aluminum foil of thickness 20 µm, and spread by a doctor knife applicator of 100 µm gap. The resulting product was left at room temperature for 15 minutes, and heated at 80 °C for 3 hours. The electrode with a single applied surface obtained is turned upside down to be fixed on a flat surface and is spread by a doctor knife applicator of 100 µm gap similarly. The resulting product was left at room temperature for 15 minutes, and then heated at 80°C for 1 hour. The electrode obtained is the electrode layer applied on both side of aluminum foil of thickness 20 µm gap, and the entire thickness was 170 µm. This electrode of the invention is rolled by three rollers at room temperature. The thickness of the electrode after rolling was 120 µm gap.

### (e) Example of manufacture of negative electrode structure (Example 5)

9.1 weight parts of graphite powder of average particle size 5 µm which is a powdered electrode active substance, 0.341 weight parts of an ion-conducting polymer raw material (A1) and 3.0 weight parts of acetonitrile were introduced into a press-sliding mixer (capacity 300cc), and the mixture press-slid for 7 hours. The press-slid substance was paste-like. Next, 0.159 weight parts of polymeric MDI, MR-200 (NPU Co.) was added, and the mixture press-slid for 5 minutes. The press-slid substance was removed, transferred to copper foil of thickness 20 µm, and spread by a doctor knife applicator of 100 µm gap. The resulting product was left at room temperature for 15 minutes, and heated at 80°C for 1 hour. The electrode with a single applied surface obtained is turned upside down to be fixed on a flat surface and is spread by a doctor knife applicator of 100 µm gap similarly. The resulting product was left at room temperature for 15 minutes, and then heated at 80°C for 1 hour. The electrode obtained is the electrode layer applied on both side of aluminum foil of thickness 20 µm gap, and the entire thickness was 170 µm. This electrode of the invention is rolled by three rollers at room temperature. The thickness of the electrode after rolling was 120µm gap.

### (f) Example of manufacture of positive electrode structure (Example 6)

9.1 weight parts of graphite powder of average particle size 5µm which is a powdered electrode active substance, 0.2 weight parts of an ion-conducting polymer raw material (A2) and 3.0 weight parts of acetonitrile were introduced into a press-sliding mixer (capacity 300cc), and press-slid for 5 hours. The press-slid substance was paste-like. A solution of 0.01 weight parts of 2,2'-azobis (2,4-dimethylvaleronitrile) and 0.5 weight parts of a liquid electrolyte of ethylene carbonate (EC)/diethylene carbonate (DEC) in a volume ratio of 1:1 was added to the press-slid substance, and the mixture further press-slid for 5 minutes. The press-slid substance was removed, transferred to copper foil of thickness 20 µm, and spread by a doctor knife applicator of 100 µm gap. The resulting product was left at room temperature for 15 minutes, and heated at 80°C for 3 hours. The electrode with a single applied surface obtained is turned upside down to be fixed on a flat surface and is spread by a doctor knife applicator of 100 µm gap similarly. The resulting product was left at room temperature for 15 minutes, and then heated at 80°C for 1 hour. The electrode obtained is the electrode layer applied on both side of aluminum foil of thickness 20 µm gap, and the entire thickness was 170 µm. This electrode of the invention is rolled by three rollers at room temperature. The thickness of the electrode after rolling was 120 µm gap.

### (g) Comparative example of positive electrode structure (Comparative Example 7)

11.5 weight parts of n-methylpyrrolidine containing, in solution, 0.5 weight parts of polyvinylidene fluoride (PVDF) which has no ion-conducting property as a polymer binder, was mixed with 9.0 weight parts of LiCoO₂ of average particle size 5 µm which is a powdered electrode active substance, and 0.8 weight parts of ketjenblack and 0.2 weight parts of graphite powder of average particle size 4 µm which are powdered electrically-conducting substances, in an ordinary blade mixer. After mixing for 8 hours, the mixture was removed, transferred to copper foil of thickness 20 µm, and spread by a doctor knife applicator of 100 µm gap. The resulting product was left at room temperature for 15 minutes, and heated at 80°C for 3 hours. The electrode with a single applied surface obtained is turned upside down to be fixed on a flat surface and is spread by a doctor knife applicator of 100 µm gap similarly. The resulting product was left at room temperature for 15 minutes, and then heated at 80°C for 1 hour. The electrode obtained is the electrode layer applied on both side of aluminum foil of thickness 20 µm gap, and the entire thickness was 170 µm. This electrode of the invention is rolled by three rollers at room temperature. The thickness of the electrode after rolling was 120 µm gap.

### (h) Comparative example of positive electrode structure (Comparative Example 8)

25.5 weight parts of n-methylpyrrolidine containing, in solution, 0.5 weight parts of polyvinylidene fluoride (PVDF) which has no ion-conducting property as a polymer binder, was mixed with 9.5 weight parts of graphite powder of average particle size 4 µm which is a powdered electrically-conducting substance, in an ordinary blade mixer. After mixing for 8 hours, the mixture was removed, transferred to copper foil of thickness 20 µm, and spread by a doctor knife applicator of 100 µm gap. The resulting product was left at room temperature for 15 minutes, and heated at 80°C for 3 hours. The electrode with a single applied surface obtained is turned upside down to be fixed on a flat surface and is spread by a doctor knife applicator of 100 µm gap similarly. The resulting product was left at room temperature for 15 minutes, and then heated at 80°C for 1 hour. The electrode obtained is the electrode layer applied on both side of aluminum foil of thickness 20 µm gap, and the entire thickness was 170 µm. This electrode of the invention is rolled by three rollers at room temperature. The thickness of the electrode after rolling was 120 µm gap.

### (i) Comparative example of positive electrode structure (Comparative Example 1)

11.5 weight parts of n-methylpyrrolidine containing, in solution, 0.5 weight parts of polyvinylidene fluoride (PVDF) which has no ion-conducting property as a polymer binder, was mixed with 9.0 weight parts of LiCoO₂ of average particle size 5 µm which is a powdered electrode active substance, and 0.8 weight parts of ketjenblack and 0.2 weight parts of graphite powder of average particle size 4 µm which are powdered electrically-conducting substances, in an ordinary blade mixer. After mixing for 8 hours, the mixture was removed, transferred to copper foil of thickness 20 µm, and spread by a doctor knife applicator of 100 µm gap. The resulting product was left at room temperature for 15 minutes, and heated at 80°C for 3 hours. The electrode with a single applied surface obtained is turned upside down to be fixed on a flat surface and is spread by a doctor knife applicator of 100 µm gap similarly. The resulting product was left at room temperature for 15 minutes, and then heated at 80°C for 1 hour. The electrode obtained is the electrode layer applied on both side of aluminum foil of thickness 20 µm gap, and the entire thickness was 170 µm. This electrode of the invention is rolled by three rollers at room temperature. The thickness of the electrode after rolling was 140µm gap.

### (j) Comparative example of positive electrode structure (Comparative Example 8)

25.5 weight parts of n-methylpyrrolidine containing, in solution, 0.5 weight parts of polyvinylidene fluoride (PVDF) which has no ion-conducting property as a polymer binder, was mixed with 9.5 weight parts of graphite powder of average particle size 4 µm which is a powdered electrically-conducting substance, in an ordinary blade mixer. After mixing for 8 hours, the mixture was removed, transferred to copper foil of thickness 20 µm, and spread by a doctor knife applicator of 100 µm gap. The resulting product was left at room temperature for 15 minutes, and heated at 80°C for 3 hours. The electrode with a single applied surface obtained is turned upside down to be fixed on a flat surface and is spread by a doctor knife applicator of 100 µm gap similarly. The resulting product was left at room temperature for 15 minutes, and then heated at 80°C for 1 hour. The electrode obtained is the electrode layer applied on both side of aluminum foil of thickness 20 µm gap, and the entire thickness was 170 µm. This electrode of the invention is rolled by three rollers at room temperature. The thickness of the electrode after rolling was 140µm gap.

### (k) Charging/discharging tests

A test lithium ion secondary cell was manufactured using the positive electrode structures manufactured in the examples and comparative examples. The positive electrode and negative electrode were both cut out to have an electrode surface area of 4cm². Completely solid polymer (all polymer), polymer gel electrolyte (polymer gel), liquid electrolyte (liquid) and a separator were sandwiched between the positive electrode and negative electrode to manufacture the test cell. The concentration of lithium salt (supporting electrolyte salt) in the respective electrolytes was arranged to be 1 M. This cell was charged at 0.3mA per 1cm² of electrolyte surface area to 4.1V, and after allowing to stand for 15 minutes, it was discharged at 0.3mA/cm² to 2.7V. Combinations for which two of these charging/discharging cycles were successfully performed, were considered to be combinations for which charging/discharging is possible, and are shown in Table 3. Table 4 shows the contents of the electrolytes listed in Table 3.

### [Table 3]

### [Table 4]

In the charging/discharging tests of the examples and comparative examples, test cells using the positive electrode and negative electrode of this invention could be successfully charged and discharged. However, test cells using the electrodes of the comparative examples and a solid or gel electrolyte could not be charged/discharged, although test cells using liquid electrolytes could be charged/discharged.

### Industrial Field of Application

This invention has the following advantages:
The roller of this invention makes it possible to sufficiently increase the density of application layer by rolling an electrode structure.
This invention further makes it possible to obtain an effective electrode structure.

### TABLES

**[Table 1]**

| Ion-conducting polymer raw material (A1) | |
|---|---|
| Substance | Mixing ratio (weight parts) |
| Trifunctional (propylene glycol/ethylene glycol) random copolymer, SANNIX FA-103 (PO/EO=2/8, Mw=3,282, Sanyo Chemical Industries, Ltd.) | 8.36 |
| Trifunctional polyol, 1,4-butadiol | 0.34 |
| Ethylene cyanohydrin | 1.27 |
| Reaction catalyst NC-IM (Sankyo Air Products K.K.) | 0.03 |
| Total | 10 |

**[Table 2]**

| Ion-conducting polymer raw material (A2) | |
|---|---|
| Substance | Mixing ratio (weight parts) |
| Cyanoethylated/dihydroxypropylated polyvinyl alcohol | 0.625 |
| Methoxypolyethyleneglycol methacrylate (mol. wt. 468) | 3.125 |
| Trimethylolpropanetri methacrylate | 6.25 |
| Total | 10 |

**[Table 3]**

| Charging/discharging test results | | | | |
|---|---|---|---|---|
| No | Positive electrode | Negative electrode | Electrolyt e | Charging/discharging test result |
| 1 | Example 1 | Example 5 | AP1 | Possible |
| 2 | Example 1 | Example 5 | AP2 | Possible |
| 3 | Example 1 | Example 5 | AP3 | Possible |
| 4 | Example 1 | Example 5 | AP4 | Possible |
| 5 | Example 1 | Example 5 | PG1 | Possible |
| 6 | Example 1 | Example 5 | PG2 | Possible |
| 7 | Example 1 | Example 5 | L1 | Possible |
| 8 | Example 2 | Example 5 | AP3 | Possible |
| 9 | Example 2 | Example 6 | PG2 | Possible |
| 10 | Example 4 | Example 5 | AP3 | Possible |
| 11 | Example 4 | Example 6 | PG2 | Possible |
| 12 | Example 7 | Example 9 | L1 | Possible |
| 13 | Comparative example 1 | Comparative example 2 | AP1 | Charging/discharging impossible |
| 14 | Comparative example 1 | Comparative example 2 | AP2 | Charging/discharging impossible |
| 15 | Comparative example 1 | Comparative example 2 | AP3 | Charging/discharging impossible |
| 16 | Comparative example 1 | Comparative example 2 | AP4 | Charging/discharging impossible |
| 17 | Comparative example 1 | Comparative example 2 | L1 | Possible |

**[Table 4]**

| Electrolyte used in test | | | |
|---|---|---|---|
| Symbol | Type | Composition | Thickness |
| AP1 | All polymer | Cyanoethylated/dihydroxypropylated cellulose (e.g. Japanese Patent Application Laid-Open No. 8-225626) | 100 µm |
| AP2 | All polymer | Cyanoethylated/dihydroxypropylated cellulose and methacryl polymer 3D cross-linked structure (e.g. Japanese Patent Application Laid-Open No. 8-225626) | 100 µm |
| AP3 | All polymer | High viscosity polyurethane electrolyte (e.g. Japanese Patent Application No. 11-78085) | 100 µm |
| AP4 | All polymer | Cyanoethylated/dihydroxypropylated polyvinyl alcohol (e.g. Japanese Patent Application No. 11-78086) | 100 µm |
| PG1 | Polymer gel | Cyanoethylated/dihydroxypropylated polyvinyl alcohol and methacryl polymer 3D cross-linked structure containing 50% ethylene carbonate (EC)/diethylene carbonate (DEC) = (1/1) vol liquid electrolyte (e.g. Japanese Patent Application No.11-78087) | 100 µm |
| PG2 | Polymer gel | High viscosity polyurethane electrolyte containing 50% ethylene carbonate (EC)/diethylene carbonate (DEC) = (1/1) vol liquid electrolyte (e.g. Japanese Patent Application No. 11-78085) | 100µm |
| L1 | Liquid | Impregnation of ethylene carbonate (EC)/diethylene carbonate (DEC) = (1/1) vol solution in polyethylene separator | 23 µm |

## Claims

1. A roller processing/rolling an electrode structure in which a powdered electrode active substance is adhered to the current collecting member, comprising
a pair of work rolls sandwiching and rolling the electrode structure,
at least a pair of backup rolls generating a pressing force onto the respective work roll,
a pressuring device pressing at least one of said backup roll toward the work roll side, and
a drive unit rotating said work rolls.

2. The roller processing/rolling an electrode structure as is claimed in Claim 1, wherein
the diameter of said backup roll is larger than the diameter of said work roll.

3. The roller processing/rolling an electrode structure as is claimed in Claim 1, wherein
said backup roll has an elastic material coated on its surface.

4. The roller processing/rolling an electrode structure as is claimed in Claim 1, which further comprises
a work roll housing having an axle receive of said work roll inside and
a housing having an axle receive of the respective roll inside, wherein
a spacer is positioned between the respective housings.

5. A roller processing/rolling an electrode structure in which a powdered electrode active substance is adhered to the current collecting member, comprising
a large diameter work roll and a small diameter other work roll having an electrode structure inbetween,
a backup roll generating a pressing force onto the surface of the small diameter work roll, and
a pressure device pressing the backup roll toward the small diameter work roll side, and a drive unit rotating the work roll.

6. The roller processing/rolling an electrode structure as is claimed in Claim 5, wherein
the diameter of said backup roll is larger than the diameter of said work roll.

7. The roller processing/rolling an electrode structure as is claimed in Claim 5, wherein
said backup roll has an elastic material coated on its surface.

8. The roller processing/rolling an electrode structure as is claimed in Claim 5, which further comprises
a work roll housing having an axle receive of said work roll inside and
a housing having an axle receive of the respective roll inside, wherein
a spacer is positioned between the respective housings.

9. An electrode structure for a secondary cell in which ions move between the electrodes, wherein
a powdered electrode active substance coated by an ion-conducting polymer is adhered to a current collecting member, and a roller processes/rolls said powdered electrode conductive substance on the current collecting member.

10. The electrode structure as is claimed in Claim 9, wherein
said powdered electrode conductive substance is mixed with said powdered electrode active substance.

11. An electrode structure of an electric double layer capacitor in which ions move between electrodes, wherein
a powdered large surface material coated with an ion-conducting polymer is adhered to a current collecting material, and
said powdered large surface material is rolled on said current collecting member by a roller.

12. The electrode structure as is claimed in Claim 11, wherein
said powdered large surface material is mixed with said powdered electrode conductive substance.
